Europäisches Patentamt

European Patent Office

Office européen des brevets

(19)

(11) Publication number : **0 448 014 B1**

(12)  # EUROPEAN PATENT SPECIFICATION

(45) Date of publication of patent specification :
**22.11.95 Bulletin 95/47**

(51) Int. Cl.⁶ : **G11B 15/43, G11B 15/46**

(21) Application number : **91104150.7**

(22) Date of filing : **18.03.91**

(54) Tape driving apparatus for tape medium record reproducing apparatus.

(30) Priority : **19.03.90 JP 68850/90**
　　　　　　 **14.11.90 JP 309822/90**

(43) Date of publication of application :
**25.09.91 Bulletin 91/39**

(45) Publication of the grant of the patent :
**22.11.95 Bulletin 95/47**

(84) Designated Contracting States :
**DE GB**

(56) References cited :
**FR-A- 2 503 911**
**GB-A- 2 087 104**
**US-A- 4 015 799**
**US-A- 4 256 996**
**US-A- 4 448 368**

(73) Proprietor : **MATSUSHITA ELECTRIC
INDUSTRIAL CO., LTD.
1006, Oaza Kadoma
Kadoma-shi, Osaka-fu, 571 (JP)**

(72) Inventor : **Yoneda, Yasuhiro
5-5, Senrioka
Settsu-shi, Osaka-fu (JP)**
Inventor : **Hiraishi, Haruo
242, Oaza Uchiage
Neyagawa-shi, Osaka-fu (JP)**

(74) Representative : **Eisenführ, Speiser & Partner
Martinistrasse 24
D-28195 Bremen (DE)**

EP 0 448 014 B1

## Description

BACKGROUND OF THE INVENTION

The present invention generally relates to a tape driving apparatus for controlling the transportation of a tape medium by a supply reel and a winding reel.

In recent years, a highly efficient tension control art which prevents the tape damages is demanded, because the thinner tendency of the tape is remarkable in the tape driving apparatus. Also, the tape driving mechanism is also simplified with the demands for smaller size, lighter weight, thinner size of the apparatus being provided. Therefore, the tape driving apparatus is provided which is simplified in mechanism without provision of the tension detecting sensor of the tape.

The convential tape driving apparatus (hereinafter a VTR will be described as a representative by way of example) is shown in, for example, Japanese Patent Application Publication Tokkaisho NO. 60 - 163258.

From the prior art document US-A-4.015.799 it is known a tape driving apparatus comprising, supply reel diameter detecting means for detecting the radius information of the supply reel, winding reel diameter detecting means for detecting the radius information of the winding reel, supply reel inertia operating means for computing the information corresponding to the inertia of the supply reel in accordance with the radius information of the supply reel, winding reel inertia operating means for computing the information corresponding to the inertia winding reel in accordance with the radius information of the winding reel.

The conventional tape tension controlling method will be described hereinafter. The conventional tape tension controlling method is to constantly control the tape tension by the application, upon the supply reel diameter, of the back torque proportional to the supply reel diameter. The principle thereof will be described. The formula is as follows.

$$STSN \times Rs = Qs \quad (1)$$

wherein
STSN:    tape tension in supply reel
R2:    supply reel radius
Q2:    supply reel motor torque

Therefore, it is found out that the torque proportional to the supply reel diameter has only to be applied upon the supply reel motor in order to retain the tape tension STSN constant when the tape is transported at a constant speed.

But the above described construction has the following problems. Namely, the VTR has not only the modes of the recording, and the normal reproduction, but also the operation modes called a jog, shuttle. The tape speeds except for the tape speed at the normal reproduction time exist, with the tape acceleration and deceleration being repeated. At this time, in the method of applying the torque proportional to the above described supply reel diameter, the tape tension may be retained constant under the conditions where the tape is transported at the constant speed, with the fluctuations of the dynamic tension to be caused by the acceleration, the deceleration of the tape being impossible to be suppressed. In the conventional tape driving apparatus, the acceleration, deceleration responses are delayed in the acceleration, deceleration of the tape so as to reduce the fluctuations of the tension. Therefore, the transportation of the tape to the object point of the tape is delayed so as to sacrifice the access property of the tape.

The tape driving apparatus to be used for the external memory apparatus of the computer will be described hereinafter in the conventional embodiment. In the tape driving apparatus described in Japanese Patent Publication Tokkosho No. 59-20178, the current for driving the reel motor is divided into three components such as acceleration current, tension current, drag current in the acceleration, the deceleration of the tape. The reel radius and the inertia are detected, and further the tape acceleration speed is obtained from the target speed to be controlled, the present tape speed and the tape acceleration from the enacted time, with a method of computing, setting the driving current of the reel so that the tape tension may become constant.

But in the above described construction, the tape running loads changes with the changes in environment where the tape driving apparatus is provided, with the aging, the drag current component does not become constant, with a problem that the tape tension has been changed. In order to correct the problem, the tension detection sensor is provided to correct it. Accordingly, it interferes with the smaller size and the lighter weight of the apparatus.

SUMMARY OF THE INVENTION

Accordingly, the present invention has been developed with a view to substantially eliminating the above discussed drawbacks inherent in the prior art, and has for its essential object to provide an improved tape driving apparatus for a tape medium record reproducing apparatus.

Another important object of the present invention is to provide an improved tape driving apparatus for a tape medium record reproducing apparatus, which is adapted to effect the tension control in the construction except for the tension detecting sensor so as to contribute towards the smaller size and lighter weight of the tape driving apparatus.

Still another object of the present invention is to provide an improved tape driving apparatus for a tape medium record reproducing apparatus, which is adapted to quicken the acceleration, deceleration of the tape so as to improve the access property. Also, the tape speed detector such as timer roller or the like is removed in the tape speed controlling operation so as to contribute towards the smaller size and the lighter weight of the tape driving apparatus.

In accomplishing these and other objects, according to one preferred embodiment of the present invention, there is provided a tape driving apparatus which comprises a supply reel diameter detecting means for detecting the radius information Rs of the supply reel, a winding reel diameter detecting means for detecting the radius information Rt of the winding reel, a supply reel inertia computing means for computing the information Js corresponding to the inertia of the supply reel under the radius information Rs of the supply reel, a winding reel inertia computing means for computing the information $J_T$ corresponding to the inertia of the winding reel under the radius information Rt of the winding reel, a winding reel acceleration torque detecting means for detecting the information ACCT corresponding to the torque amount spent in the acceleration, deceleration of the winding reel, a winding reel acceleration compensating torque computing means for computing the acceleration compensating torque information CMPT corresponding to the acceleration, deceleration of the winding reel by the use of the radius information Rs, Rt of both the reels, the inertia information Js, $J_T$ of both the reels, the winding reel acceleration torque information ACCT, a back torque computing means for computing the back torque information $Q_B$ proportional to the radius information Rs of the feed reel, an adding means for adding the back torque information $Q_B$ and the acceleration compensating torque information CMPT.

In the above described construction of the present invention, the static tension fluctuations which are caused by the changes in the reel diameter are corrected by the back torque information $Q_B$ to be computed from the radius information Rs of the supply reel. Also, the dynamic tension fluctuations which are caused by the acceleration, deceleration in the reel diameter are suppressed by the acceleration compensating torque information CMPT, so that the tension control may be realized without the use of the tension detecting sensor.

## BRIEF DESCRIPTION OF THE DRAWINGS

These and other objects and features of the present invention will become apparent from the following description taken in conjunction with the preferred embodiments thereof with reference to the accompanying drawings, in which;

Fig. 1 is a block diagram showing the construction of a tape driving apparatus in a first embodiment of the present invention;

Fig. 2 is a characteristic chart showing one example of the characteristics of the S reel inertia Js with respect to the S reel radius information Rs;

Fig. 3 is a characteristic chart showing one example of the characteristics of the T reel inertia $J_T$ with respect to the T reel radius information $R_T$;

Fig. 4 is a characteristic chart showing one example of an acceleration compensating coefficient $(R_T.Js/Rs.J_T)$ with respect to the S reel radius information Rs;

Fig. 5 is a characteristic chart showing the characteristics of the total information of the rotation frequency of both the reels in the transportation of the constant tape speed, and of the tape winding diameter;

Fig. 6 is a characteristic chart showing the relationship between the T reel driving information $Q_T$ to be fed to the T reel motor driving circuit 6 in Fig. 1 and the caused torque of the T reel motor 7;

Fig. 7 is a wave form chart showing the relationship of the various information signals of a tape speed control system in Fig. 1 when the target tape speed has been accelerated, decelerated;

Fig. 8 is a wave form chart for illustrating the operation of a second U/D counter 22 in Fig. 1;

Fig. 9 (a) to (e) are flow charts when the block 26 in Fig. 1 is composed of microcomputers.

Fig. 10 is a block diagram showing the construction of the tape driving apparatus in a second embodiment of the present invention; and

Fig. 11 is a flow chart in a case where the block in Fig. 1 is composed of microcomputers.

## DETAILED DESCRIPTION OF THE INVENTION

Before the description of the present invention proceeds, it is to be noted that like parts are designated

EP 0 448 014 B1

by like reference numerals throughout the accompanying drawings.

In the present invention, the torque of the S reel motor is controlled with the error information with the back torque information proportional to the S reel diameter and the acceleration compensating torque information for suppressing the tension fluctuations to be caused by the acceleration, deceleration of the tape transportation being added in it.

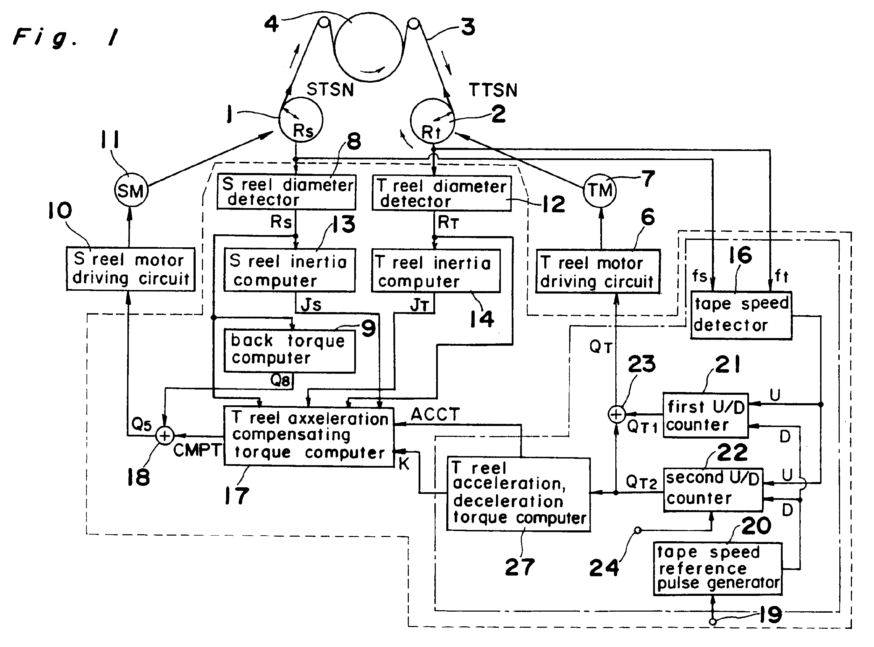

Referring now to the drawings, there is shown in Fig. 1, the block diagram of a tape driving apparatus in a first embodiment of the present invention, according to a first embodiment of the present invention, which includes a supply reel 1 (hereinafter referred to as S reel), a winding reel (hereinafter referred to as T reel), with the tape 3 being wound around a drum 4 (which is rotating in the arrow mark direction shown) mounted on the rotary magnetic head (not shown) and being transported in the direction of the arrow mark. A T reel motor driving circuit 6 causes in a T reel motor (hereinafter referred to as TM) 7 the torque proportional to the T reel motor torque information Qt to be fed. A S reel diameter detector 8 outputs the information Rs proportional to the radius of the S reel 1. A back torque computer 9 for outputting the back torque information QB to an adder 18 through the computing operation shown in the (1) formula. A S reel motor driving circuit 10 is adapted to operate so as to cause in the S reel motor (hereinafter referred to as SM) the torque proportional to the S reel torque information Qs to be fed from the adder 18. A T reel radius detector 12 for detecting the information $R_T$ corresponding to the reel radius of the T reel 2, a S reel inertia computer for computing the S reel inertia Js in accordance with the radius information Rs of the S reel, a T reel inertia computer 14 for computing the the T reel inertia $J_T$ under the radius information $R_T$ of the T reel, a T reel acceleration, deceleration torque detector 15 (which is a block surrounded with one dot chain lines) for detecting the torque spent in the acceleration, deceleration of the T reel 1 from a method of the speed controlling of the T reel to be described later, a tape speed detector 16 for detecting the tape speed and generating pulses with the frequency proportional to the detection result, a T reel acceleration compensating torque computer 17 for effecting the acceleration compensating computing operation so as to compensate the tension variation to be caused in the acceleration, deceleration of the T reel 1, an adder 18 for adding the back torque information $Q_B$ proportional to the S reel diameter and the T reel acceleration compensating torque information CMPT, a terminal 19 for feeding the tape speed instructions as the target, a tape speed reference pulse generator 20 for generating the pulses of the frequency proportional to the target tape speed fed from the terminal 19, first, second up down counters (hereinafter referred to as U/D counters) 21, 22 for connecting the clock pulses fed from the tape speed detector 16 to a count up terminal, and the clock pulses to be fed from the tape speed reference pulse generator 20 to a count down terminal, an adder 23 for adding the output information $Q_{T1}$ of the first U/D counter 21 and the output information $Q_{T2}$ of the second U/D counter 22, a terminal 24 for latching the output information $Q_{T2}$ of the second U/D counter 22 for each constant time period so as to feed the timing signal which is adapted to initialize the value of the counter immediately after it. A T reel acceleration, deceleration torque computer 27 for inputting the output information $Q_{T2}$ of the second U/D counter 22 and outputting to the T reel acceleration compensating torque computer 17 the acceleration, deceleration torque information ACCT of the T reel and the proportional constant K to be described later.

The back torque information $Q_B$ proportional to the S reel diameter is obtained through the S reel diameter detector 8, the back torque computer 9 and is fed to the adder 18 as in the description of the conventional embodiment.

The correction of the tension fluctuations in the acceleration, deceleration of the tape transportation will be described hereinafter.

The dinetic formulas of both the S, T reels are as follows.

$$Js \times a\omega s = Qs - Rs \times STSN \quad (2)$$
$$J_T \times a\omega_T = Q_T - R_T \times TTSN \quad (3)$$

wherein

Rs:       S reel radius
$R_T$:       T reel radius
Js:       S reel inertia
$J_T$:       T reel inertia
STSN:    tape tension of the S reel
TTSN:    tape tension of the T reel
$Q_T$:       T reel motor torque
$\omega s$:       S reel rotation angle speed
$\omega_T$:       T reel rotation angle speed
$a\omega s$:      S reel rotation acceleration
$a\omega_T$:      T reel rotation acceleration

The relation between the tape tension STSN of the S reel and the tape tension TTSN of the T reel is

4

$$TTSN = a \times STSN \quad (4)$$

wherein the a is a proportion coefficient determined with a tape running pass.

Also, the tape speed V is as follows.

$$V = Rs \times \omega s = R_T \times \omega_T \quad (5)$$

In order to maintain the tape tension constant if the rotation acceleration $a\omega s$ of the S reel changes at the tape acceleration and deceleration time from the (2) formula, the correcting torque dQs (change portion of the Qs) has only to be established as in the following formula.

$$dQs = Js \times da\omega s \quad (6)$$

wherein the $da\omega s$ is the variation portion of the $a\omega s$. From the (5) formula, the relation of both the S, T reel rotation accelerations is as follows.

$$da\omega_T = (Rs / R_T) \times da\omega s \quad (7)$$

From the (3) formula, the following formula is established in the condition where the tape tension is controlled constant.

$$da\omega_T = dQ_T / J_T \quad (8)$$

The proportional coefficient a of the (4) formula is different in the transportation direction of the tape. This is because the running load is different when the tape is transported in the same direction as the rotation direction of the drum 4 and it is transported in the opposite direction, further the tape is restrained in running in a post for winding the tape 3 around the drum 4, and so on. Thus, a proportional coefficient k corresponding to the tape running load is introduced.

The S reel motor correcting torque dQs for suppressing the tension fluctuations is as follows.

$$dQs = K(R_T / Rs) \times (Js / J_T) \times dQ_T \quad (9)$$

Namely, detect both the S, T reel diameters, the inertia, the acceleration, deceleration torque fluctuation amount of the T reel motor, and effect the torque connection shown in the (9) formula upon the S reel motor, and the dynamic tension fluctuation accompanied by the acceleration, the deceleration of the tape may be controlled.

The above described tension control will be described with reference to Fig. 1.

In Fig. 1, reference numeral 8 is a S reel diameter detector, to which the information Rs corresponding to the S reel radius is outputted. Likewise, the information $R_T$ corresponding to the T reel radius is outputted to the T reel diameter detector 12. In the S reel inertia computer 13, the inertia Js of the S reel 1 is computed under the S reel radius information Rs.

Generally the inertia J of the reel is shown the (10) formula.

$$J = Jfix + Jvar \quad (10)$$

J : reel inertia

Jfix : inertia (invariant to the reel diameter) of the reel motor, the empty reel inertia and so on.

Jvar : tape inertia (proportional to the reel diameter)

$$Jvar = K1 \times (R^4 - Rh^4) \quad (11)$$

K1 : constant

R : reel radius

Rh : reel hub radius

If the reel radius R may be measured from the (10), (11) formulas, the reel inertia J may be computed.

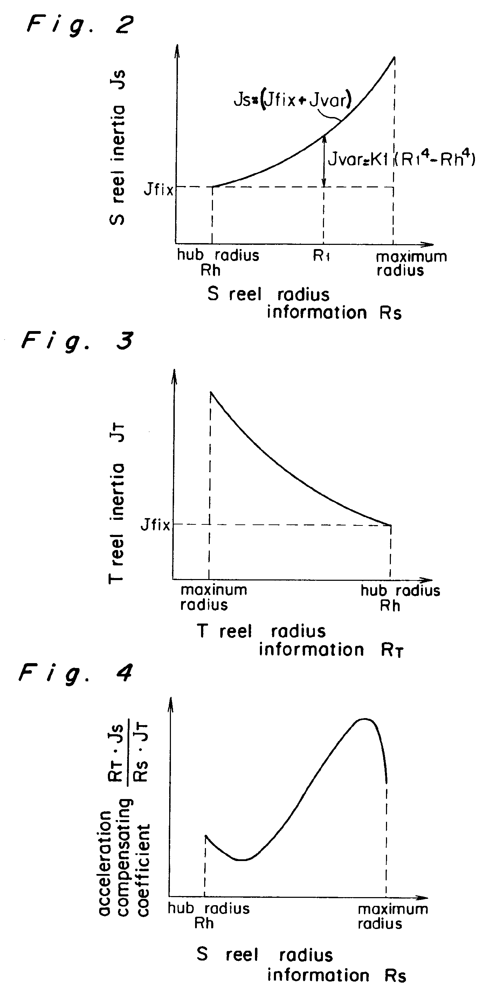

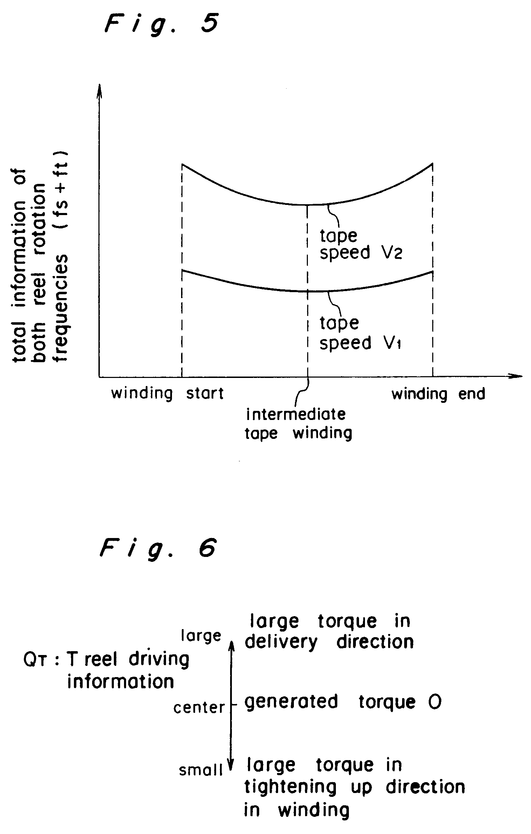

The S reel inertia information Js is computed in accordance in accordance with the (10) formula by the S reel inertia computer 13. The T reel inertia information $J_T$ is computed in accordance with the (11) formula by the T reel inertial computer 14. Fig. 2 is a characteristic chart showing the operation result of the S reel inertia Js corresponding to the radius information Rs of the S reel 1. Fig. 3 is a characteristic chart (the axis of abscissas is shown in the order from the maximum radius to the hub radius so as to correspond to the S reel radius) of the radius information $R_T$ of the T reel 2 and the T reel inertia $J_T$.

The control of the T reel motor 7 will be described before the detecting method of the torque information to be spent on the acceleration, deceleration of the T reel 2 is described.

Since the shuttle mode exists in the VTR as described hereinabove, a plurality types of tape target speeds exist. In the control for driving the winding side reel, the actual tape speed is detected so as to become a target tape speed given from the system control and so on so as to detect the error signal with respect to the target speed. The error signal is feedbacked on the T reel motor driving circuit to effect the tape speed controlling.

The tape speed control will be described in accordance with the Fig. 1.

The rotation pulses fs, ft of the frequencies to proportional to the rotation of both the reels are inputted to the tape speed detector 16 in Fig. 1 so as to detect the tape speed from the rotation frequencies of both the reels. The rotation frequencies of both the reels are used in the detection of the tape speed as known. Even in the present embodiment, it is composed of an example in using the total information of both the reel rotation frequencies.

Fig. 5 is a relationship chart showing the relation among the tape speed, the total information fs + ft of both the reel rotation frequencies and the tape winding diameter. When the tape speed shows V1 and V2 (V1 < V2), it is found out that the total information fs + ft of both the reel rotation frequencies are proportional if the tape winding diameter is in the same place. If the tape speed reference information to be controlled is corrected from the tape winding diameter information, it is possible to control the tape speed constantly from the winding start to the winding end.

Fig. 6 is a relationship chart showing the relation between the T reel driving information $Q_T$ to be fed to the T reel motor driving circuit 6 in Fig. 1 and the torque-to-be-caused of the T reel motor 7. When the T reel driving information $Q_T$ is at the center, the generated torque of the T reel motor is zero. As the value of the driving information $Q_T$ becomes smaller, the generated torque becomes larger in the direction along which the tape is tightened up in the winding. Conversely, as the value of the driving information $Q_T$ becomes larger, the generated torque becomes larger in a direction along which the tape is delivered.

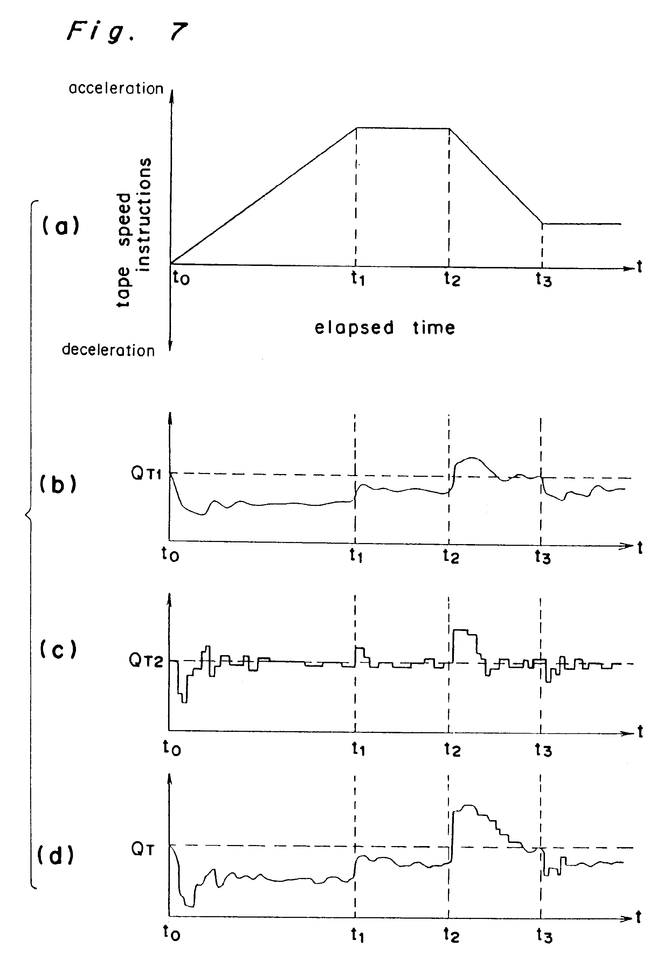

The controlling of the tape speed at the target speed will be described hereinafter with reference to Fig. 1 and Fig. 7.

Fig. 7 (a) shows the tape speed instructions to change as time passes, wherein time t0 to t1, time t1 to t2, time t2 to t3 are respectively acceleration, fixed speed, deceleration in the tape speed instructions. Also, the (b), (c), (d) shows the changes in the output information $Q_{T1}$ of a first U/D counter 21, the output information $Q_{T2}$ of a second U/D counter 22, the output information $Q_T$ of the adder 23.

In Fig. 1, the tape speed instructions are fed to the tape speed reference pulse generator from the terminal 19 with the clock pulses corresponding to the target speed corresponding to the target speeds being fed onto the side of the count down both at the first, second U/D counters 21, 22. In the condition where the tape is at its stop or is transported slower than the control target speed, the frequencies of the clock pulses connected onto the side of the count up of the respective U/D counters 21, 22 from the tape speed detector 16 are slower than the frequencies of the clock pulses connected onto the side of the count down, so that the counter values of the first, second U/D counters 21, 22 become lower. The output information $Q_T$ of the adder 23 is also lowered, so that the T reel motor driving circuit 6 is operated to increase the tape speed.

Conversely, if the tape speed is faster than the speed instructions, the values of the first, second U/D counter 21, 22 become larger. As a result, the generated torque of the T reel motor 7 is operated in the direction along which the tape speed is decreased. In this manner, the tape speed is controlled so as to conform to the given tape speed instructions.

Here the operation of the second U/D counter 22 will be described.

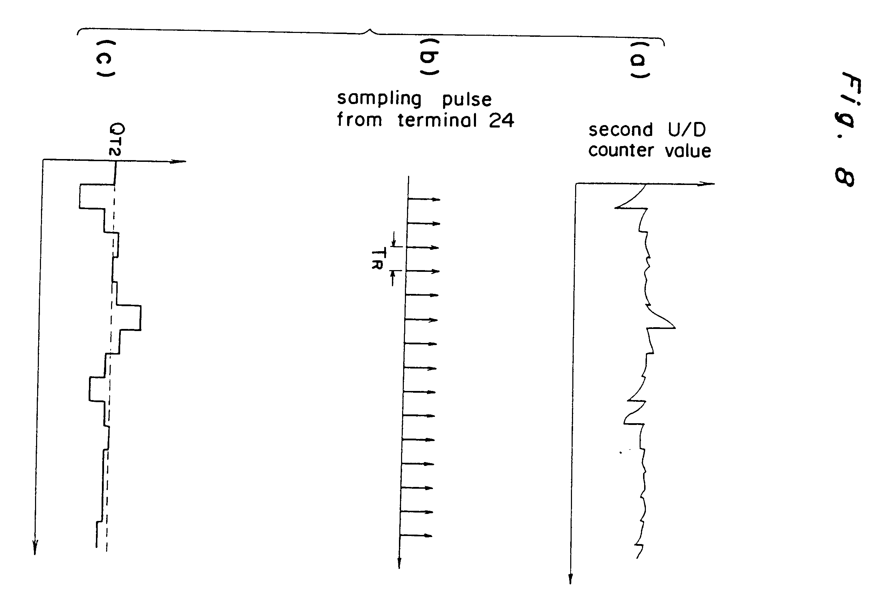

Fig. 8 shows the wave form charts showing the relationship among the second U/D counter value, the sampling pulse to be fed from the terminal 24, and the output $Q_{T2}$ of the second U/D counter 22. As shown in the (b), the sampling pulse is fed at the constant period $T_R$ to the second U/D counter 22, the value $Q_{T2}$ of the second U/D counter 22 in the timing is outputted, the output value is retained until the timing of the next sampling. The value of the second U/D counter 22 is set to the initial value (the value of the center in the present embodiment) as shown in the (a) after the sampling, and effects the count up, and the count down until the next sampling pulse comes. The (c) shows the output information $Q_{T2}$ of the second U/D counter 22.

The second U/D counter 22 is operated as described hereinabove so that the differentiated information of the value of the first U/D counter 21 may be obtained.

By the use of two U/D counters in construction as described hereinabove, such effects as described hereinabove are caused.

(1) As the tape speed control system is a secondary system of control system, the application of the differentiated information upon the error information $Q_T$ to be fed to the winding side motor means that the operation of adding the phase leading element has been applied upon the control error signal so as to improve the stability of the control system.

(2) The second U/D counter output information $Q_{T2}$ shows the acceleration, deceleration torque information of the T reel 2. It is easier to use the information for the control of the tension to be described in the following.

(3) The acceleration, deceleration torque information of the T reel 2 may be correctly detected if the environment changes in the tape driving apparatus and the tape running load changes. The torque information change portion of the T reel 2 by the change in the tape running load is absorbed as change in the first U/D counter 21. Therefore, it shows the acceleration, deceleration torque information of the T reel 2 to the second U/D counter 22. It can be used for the information to correct the tension fluctuations accompanied by the acceleration, deceleration of such T reel as described later.

The detection of the torque amount spent in the acceleration, deceleration of the T reel 2 is effected by the T reel acceleration, deceleration torque detector 15. The T reel acceleration, deceleration torque detector 15 is composed of a tape speed detector 16 for detecting the actual tape speed from the rotation pulses fs, ft of both the reels, a tape speed reference pulse generator 20 for generating the pulses of the frequency proportional to the target speed instructions to be fed from the the terminal 19, first, second U/D counters 21, 22 and the adder 23, and a T reel acceleration, deceleration torque computer 27. The output information $Q_{T2}$ of the second U/D counter 22 is fed to the T reel acceleration, deceleration torque computer 27 so as to effect the polarity discrimination as to whether the direction is the accelerating direction or the decelerating direction from the information $Q_{T2}$, and the proportional coefficient information K and the torque information ACCT equivalent to the torque amount spent in the acceleration, deceleration operations are outputted to the T reel acceleration compensating torque computer 17.

Both the S, T reel radius information Rs, $R_T$, both the reel inertia information Js, $J_T$, the T reel acceleration, deceleration torque information ACCT, the proportional coefficient information K are inputted to effect the operation shown in the (9) formula and to compute the torque correcting information CMPT of the S reel motor 11 for effecting the tension suppression to be fluctuated in the acceleration, deceleration of the T reel. Fig. 4 is a characteristic chart showing the operational results of the acceleration correcting coefficients ($R_T$ . Js) / (Rs . $J_T$) corresponding to the radius information Rs of the S reel. The torque correcting information CMPT is obtained through multiplication of the acceleration compensating coefficients ($R_T$ . Js) / (Rs . $J_T$) by the T reel acceleration torque information ACCT, the proportional coefficient K.

The back torque information $Q_B$ proportional to the S reel diameter is fed to the adder 18 so as to add it to the torque correcting information CMPT to be outputted from the T reel acceleration compensating torque computer 17 by the adder 18. The addition results Qs are outputted to the S reel motor driving circuit 10 as the tension control error information.

Although the construction does not use the tension detecting sensor, the tension changes by the static winding diameter difference and the dynamic tension fluctuations to be caused by the tape acceleration, deceleration may be suppressed in the above described tension control system.

The microcomputer and the digital · signal · processor have the functions of various operations, information storing, timer and so on, are used widely in the electronic appliances. Even in the present embodiment, the block 26 surrounded by the dotted lines of Fig. 1 may be composed of microcomputers, digital · signal · processors, thus contributing towards the smaller size, lighter width, smaller space of the circuit in this case.

Also, in the inertia operation of the reel to be used in the tension control, it may be constructed to effect the table retrieving of the results operated in advance so as to shorten the operating time.

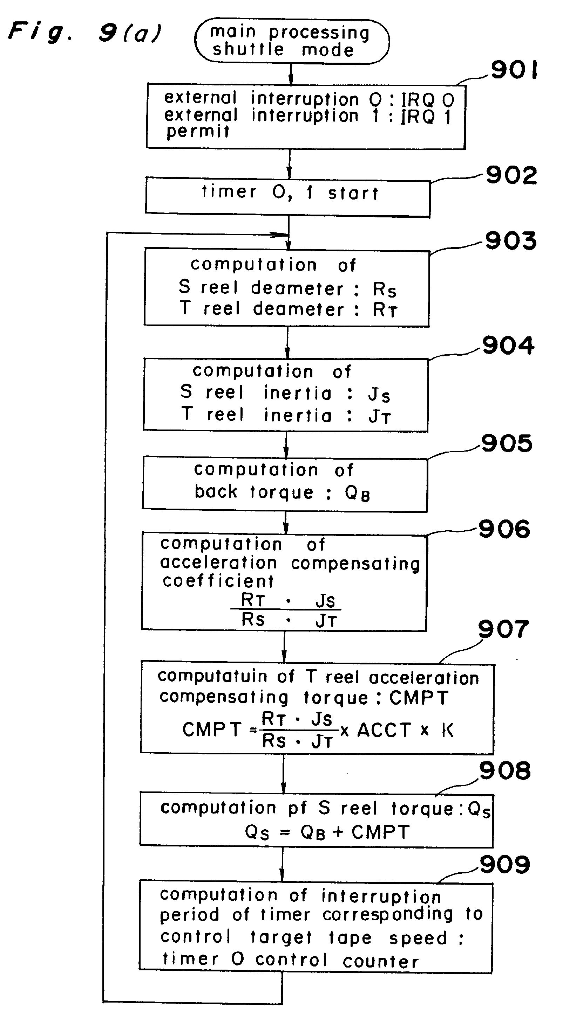

Fig. 9 (a) to (e) are flow charts wherein the block 26 surrounded with the dotted lines in Fig. 1 is composed of microcomputers. The processings are divided into five blocks.

The S reel FG pulses are inputted to the external interruption terminal 0 terminal, and the T reel FG pulses are inputted to the external interruption 1 so as to start the interruption processings of the IRQ0, IRQ1 at the edges of the respective pulses.

Also, the microcomputer is adapted to start in two timers. The interruption period of the first timer interruption processing timer 0 is varied by the operation of the value of the interrupt control counter counted by the main processing. The second timer interruption processing timer 1 is set to cause the interruption at a constant period.

The processing of the main processing will be described hereinafter. When the shuttle mode is selected, the microcomputer permits the external interruption 0 and the external interruption 1 (processing 901). The timer 0, the timer 1 are started (processing 902). The diameters Rs, Rt of both the reels are calculated from the FG pulses of both the reels and the tape total amount data, the tape thickness data (processing 903). The respective inertias Js, Jt are calculated in accordance with the result obtained by the processing 903 (processing 904). When the calculating operation is complicated, and the computing time becomes long, it is possible to effect the table retrieving operation with the data counted in advance being accommodated in the ROM. The back torque QB is operated with the use of the S reel diameter Rs obtained by the processing 903 (processing 905). In the processing 906, the operation of the acceleration compensating coefficients is effected with the use of the Rs, Rt, Js, Jt obtained by the processings 903, 904. In the processing 907, the multiplication of the acceleration compensating coefficients obtained by the processing 906 and the T reel acceleration torque Qt2, the coefficient K to be detected by the processing of the timer 1 are effected, so that the T reel acceleration compensating torque CMPT is obtained. In the processing 908, the back torque QB obtained by the processing 905 is added to the T reel acceleration compensating torque CMPT obtained by the processing 907 so as to obtain the S reel torque Qs. In the processing 909, the interruption period of the timer 0 corresponding to the control target tape speed is counted so as to store on the timer 0 control counter the value corresponding to the result. The calculation is operated from the control target tape speed and both the reel diameters as shown in Fig. 5. By the operation result of the processing 909, the timer 0 causes the interruption processing at the period corresponding to the control target tape speed, the tape winding condition (winding start through the winding end). In the main processing, the operation of the processing 909 is repeated from the processing 903.

7

The operation of the timer 0 processing will be described hereinafter.

When the interruption of the timer 0 is caused, the first, second up down counters Qt1, Qt2 (RAM within the microcomputer) are respectively counted down (processing 910). The timer 0 control counter computed by the main processing 909 is set (processing 911) to start the timer 0 (processing 912) so as to prepare for the next interruption.

The external interruption processings IRQ0, IRQ1 will be described hereinafter. When the edges of the S, T reel FG pulses are inputted to generate the interruption processing, the first, second up down counters Qt1, Qt2 are respectively counted up (processing 913, processing 915) so as to prepare for the next interruption processings (processing 914, processing 916).

The operation of the timer 1 will be described hereafter.

In the timer 1 interruption processing to be generated for each constant time period, the T reel acceleration torque information is detected. When the interruption is caused, the value of the second up down counter Qt2 of that time is sampled (processing 917), the value is used for the main processing as the T reel acceleration torque information. Therefore, the second up down counter Qt2 is initialized (processing 918). The T reel torque Qt is obtained by the addition between the value of the second up down counter Qt2 sampled and the value of the first up down counter Qt1 (processing 919). The timer 1 is started in preparation for the next interruption (processing 920).

By such a series of processings, the block 26 surrounded by the dotted lines in Fig. 1 may be easily composed of the microcomputers.

According to the above described embodiment, by the provision of adding the torque proportional to the supply reel diameter and the compensating torque for suppressing the tension fluctuations in the acceleration, deceleration of the winding reel, the tape damage may be prevented at the transient time of accelerating, decelerating of the tape, instead of at the steady transporting time. Also, the tape speed may be stably controlled in the construction where the U/D counter is provided by two through the detection of the tape speed from the rotation pulses of both the reels. The construction may be effected without the tape speed detection sensor such as timer roller or the like.

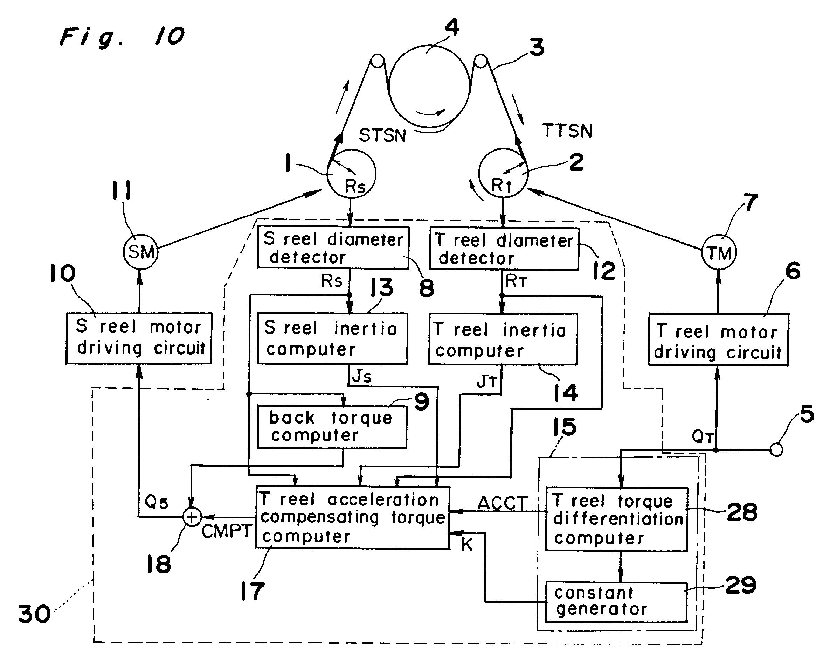

Fig. 10 is a block diagram of a tape driving apparatus in a second embodiment of the present invention. In the difference between the first embodiment and the second embodiment is in the construction of the T reel acceleration, deceleration torque detecting means 15.

In Fig. 10, the T reel acceleration, deceleration torque detecting means 15 is composed of the T reel torque differentiation computer 28 and the constant generator 29. The T reel motor torque information QT which is fed from the terminal 5 is inputted to the T reel torque differentiation computer 28. The information ACCT of the differentiated T reel torque information is outputted to the T reel acceleration compensating torque computer 17. Also, the output information ACCT of the T reel differentiation computer 28 is inputted to the constant generator 29 to effect the polarity differentiation, so that the proportional constant K corresponding to the results is outputted to the T reel acceleration compensating torque computer 17.

As clear even from the above described (9) formula, the T reel acceleration compensating torque information CMPT may be obtained as in the description of the first embodiment if the differentiation information of the T reel motor torque information QT is obtained.

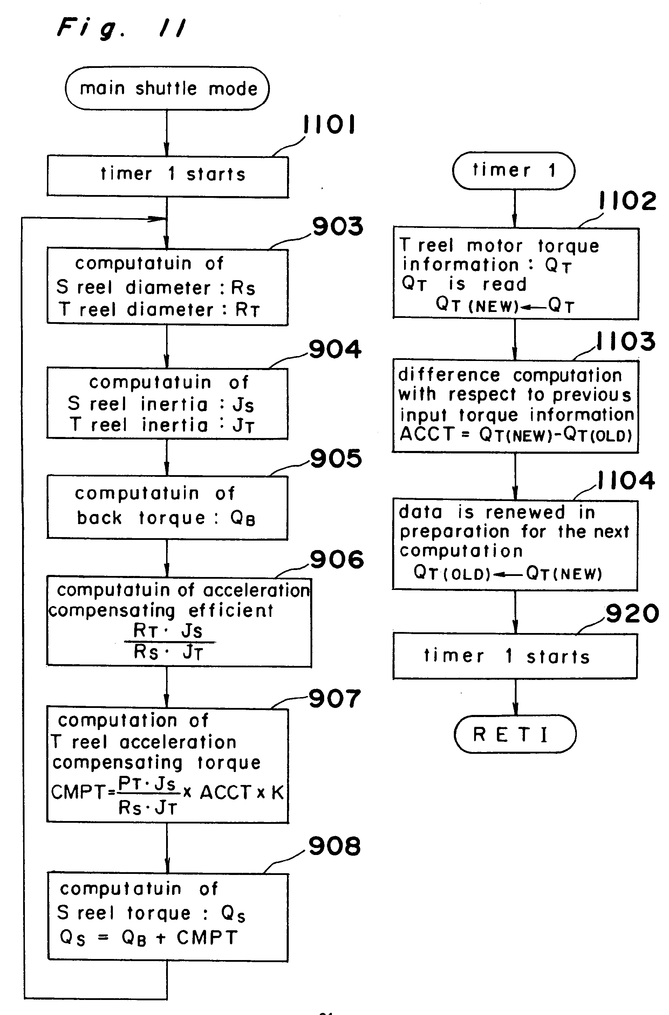

Fig. 11 is a flow chart where the block 30 surrounded by the dotted lines in Fig. 10 is composed of computers.

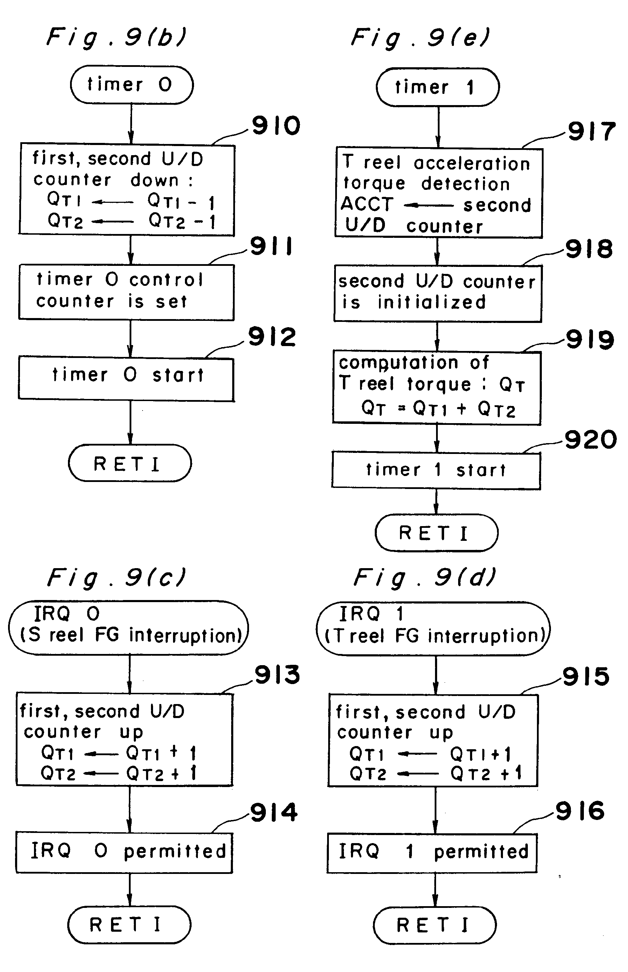

The processings are largely divided into two blocks between the main processing and the timer 1 processing. After the starting of the timer 1 in the main processing (processing 1101), the processings (processing 903 through processing 908) similar to Fig. 9 are effected.

The timer 1 causes the interrupting processing for each constant time, and the following processings are effected. When the interruption of the timer 1 is caused, the T reel motor torque information QT is read and the read information is stored as the QT (NEW) (processing 1102). Then, the information QT (OLD) stored in the previous interruption and the difference information of the information QT (NEW) are computed (processing 1103). The difference information is used with the main processing as the T reel torque acceleration, deceleration torque information ACCT. The data is renewed in preparation for the next differentiation operation (QT(OLD) ← QT(NEW) processing 1104). Finally, the timer 1 is started (processing 920) so as to complete the processing of the timer 1.

In such a series of processings, it may easily constitute the block 30 in Fig. 10 with microcomputers.

As described hereinabove, the present invention is provided with a supply reel diameter detecting means, a winding reel diameter detecting means, a supply reel inertia operating means, a winding reel inertia operating means, a winding reel acceleration, deceleration torque detecting means, a winding reel acceleration compensating torque operating means, a back torque operating means, an adding means, so that it may become possible to stably control the tension with a tension control system which does not use the tension detection center, may become possible to stably control the tape speed in the construction which does not use the tape speed detection sensor. The tape driving apparatus is simplified, is made smaller, lighter. The tape damages are prevented. The access property is superior in the variable speed. Therefore, the practical effects are large.

Although the present invention has been fully described by way of example with reference to the accompanying drawings, it is to be noted here that various changes and modifications will be apparent to those skilled in the art. Therefore, unless otherwise such changes and modifications depart from the scope of the present invention as defined by the appended claims, they should be construed as included therein.

## Claims

1. A tape driving apparatus in a tape medium record reproducing apparatus for controlling the supply reel motor (11) torque in accordance with the torque information Qs with the acceleration compensating torque information CMPT and the back torque information $Q_B$ being added in it comprising,

a supply reel diameter detecting means (8) for detecting the radius information Rs of a supply reel,

a winding reel diameter detecting means (12) for detecting the radius information $R_T$ of the winding reel,

a supply reel inertia operating means (13) for computing the information Js corresponding to the inertia of the supply reel (1) in accordance with the radius information Rs of the supply reel (1),

a winding reel inertia operating means (14) for computing the information $J_T$ corresponding to the inertia of the winding reel (2) in accordance with the radius information $R_T$ of the winding reel (2), characterized in that the tape driving apparatus further comprising,

a winding reel acceleration, deceleration torque detecting means (15, 27) for detecting the information ACCT proportional to the torque amount spent in the acceleration, deceleration of the winding reel (2),

a winding reel acceleration compensating torque computing means (17) for computing the acceleration compensating torque information CMPT corresponding to the acceleration, deceleration of the winding reel (2) with the use of the radius information Rs, $R_T$ of both the reels (1, 2), the inertia information Js, $J_T$ of both the reels (1, 2), the winding reel acceleration, deceleration torque information ACCT,

a back torque computing means (9) for computing the back torque information $Q_B$ proportional to the radius information Rs of the supply reel (1),

an adding means (18) for adding the back torque information $Q_B$ to the acceleration compensating torque information CMPT.

2. A tape driving apparatus in a tape medium record reproducing apparatus described in accordance with the claim 1, wherein the winding reel accleration, deceleration torque detecting means (15) is composed of an first and second up, down counter (21, 22) which is adapted to increase, decrease the value in accordance with the tape speed information as the target and the difference of the tape speed to be actually detected, the sampled value of the up down counter value for each constant time period is outputted as the winding reel acceleration, deceleration torque information so that the value of the up down counter is adapted to be initialized after the output operation.

3. A tape driving apparatus in a tape medium record reproducing apparatus described in accordance with the claims 1 and/or 2, comprising

first, second up down counters (21, 22) for increasing, decreasing the values in accordance with the tapes speed information as the object and the difference of the tapes speed to be actually detected,

adding means (23) for adding the output information $Q_{T1}$ of the first up down counter (21) and the output information $Q_{T2}$ of the second up down counter (22),

wherein the second up down counter (22) samples the counter value for each constant time, the counter information is outputted to the adding means (23), the counter value is operated to be initialized after the output operation, the winding side reel motor torque (7) is adapted to be controlled in accordance with the output information of the adding means (23), further comprising,

a tape speed reference pulse generator (19) for generating the pulse of the frequency proportional to the tape speed as an object, and

a tape speed detector (16) for detecting the actual tape speed.

4. A tape driving apparatus in a tape medium record reproducing apparatus described in accordance with the claim 3, wherein the tape speed detector (16) is adapted to effect a detecting operation with the use of the total information of the frequency information fs proportional to the rotation of the supply reel (1) and of the frequency information ft proportional to the rotation of the winding reel (1).

**Patentansprüche**

1. Bandantriebsvorrichtung in einem Bandaufnahme-Wiedergabegerät zum Steuern des Drehmoments eines Abspulrollenmotors in Übereinstimmung mit der Drehmomentinformation Qs, in die die Beschleunigungs-Kompensations-Drehmomentinformation CMPT und die Gegendrehmomentinformation $Q_B$ eingerechnet sind, enthaltend:

    eine Erfassungseinrichtung (8) für den Abspulrollendurchmesser zum Erfassen der Radiusinformation Rs einer Abspulrolle,

    eine Erfassungseinrichtung (12) für den Aufspulrollendurchmesser zum Erfassen der Radiusinformation $R_T$ der Aufspulrolle,

    eine Funktionseinheit (13) für die Abspulrollenträgheit zum Berechnen der der Trägheit der Abspulrolle (1) entsprechenden Information Js in Übereinstimmung mit der Radiusinformation Rs der Abspulrolle (1),

    eine Funktionseinheit (14) für die Aufspulrollenträgheit zum Berechnen der der Trägheit der Aufspulrolle (2) entsprechenden Information $J_T$ in Übereinstimmung mit der Radiusinformation $R_T$ der Aufspulrolle (2),

    **dadurch gekennzeichnet**, daß die Bandantriebsvorrichtung weiter enthält:

    eine Erfassungseinrichtung (15, 27) für das Beschleunigungs-bzw. Abbremsdrehmoment der Aufspulrolle zum Erfassen der Information ACCT proportional zu dem Drehmomentbetrag, der bei der Beschleunigung sowie dem Abbremsen der Aufspulrolle (2) aufgewendet wird,

    eine Berechnungseinrichtung (17) für ein Aufspulrollenbeschleunigungskompensationsdrehmoment zum Berechnen der Beschleunigungskompensationsdrehmomentinformation CMPT entsprechend der Beschleunigung sowie dem Abbremsen der Aufspulrolle (2) unter Verwendung der Radiusinformation Rs, $R_T$ der beiden Rollen (1, 2), der Trägheitsinformation Js, $J_T$ der beiden Rollen (1, 2) und der Beschleunigungs-Abbremsdrehmomentinformation ACCT der Aufspulrolle,

    eine Berechnungseinrichtung (9) für ein Gegendrehmoment zum Berechnen der Gegendrehmomentinformation $Q_B$ proportional zu der Radiusinformation Rs der Abspulrolle (1),

    eine Addiereinrichtung (18) zum Addieren der Gegendrehmomentinformation $Q_B$ zu der Beschleunigungskompensationsdrehmomentinformation CMPT.

2. Bandantriebsvorrichtung nach Anspruch 1, bei der die Erfassungseinrichtung (15) für das Beschleunigungs-bzw. Abbremsdrehmoment der Aufspulrolle aus einem ersten und einem zweiten Auf- bzw. Abwärtszähler (21, 22) gebildet ist, welcher in der Lage ist, den Wert zu erhöhen bzw. zu verringern in Übereinstimmung mit der Bandgeschwindigkeitsinformation als dem Sollziel und der Differenz der im Augenblick zu erfassenden Bandgeschwindigkeit, wobei der abgetastete Wert des Auf- bzw. Abwärtszählers für jede konstante Zeitperiode als die Beschleunigungs- bzw. Abbremsdrehmomentinformation der Aufspulrolle ausgegeben wird, so daß der Wert des Auf- bzw. Abwärtszählers in der Lage ist, nach dem Ausgabevorgang initialisiert zu werden.

3. Bandantriebsvorrichtung nach Anspruch 1 und/oder 2, enthaltend

    einen ersten und einen zweiten Aufwärts- bzw. Abwärtszähler (21, 22) zum Erhöhen bzw. Verringern der Werte in Übereinstimmung mit den Bandgeschwindigkeitsinformationen als Object und der Differenz der augenblicklich zu erfassenden Bandgeschwindigkeiten,

    Addiermittel (23) zum Addieren der Ausgabeinformation $Q_{T1}$ des ersten Auf- bzw. Abwärtszählers (21) und der Ausgabeinformation $Q_{T2}$ des zweiten Auf- bzw. Abwärtszählers (22),

    wobei der zweite Auf- und Abwärtszähler (22) den Zählwert für jede konstante Zeitdauer abtastet, wobei die Zählinformation an die Addiermittel (23) ausgegeben wird, wobei der Zählerwert nach dem Ausgabevorgang initialisiert wird, und wobei das Drehmoment (7) des aufspulseitigen Rollenmotors in Übereinstimmung mit der Ausgabeinformation der Addiermittel (23) gesteuert wird, weiterhin enthaltend

    einen Generator (19) für Bandgeschwindigkeitsreferenzimpulse zum Generieren der Impulse der Frequenz proportional zu der Bandgeschwindigkeit als Objekt, und

    eine Erfassungseinrichtung (16) für die Bandgeschwindigkeit zum Erfassen der aktuellen Bandgeschwindigkeit.

**4.** Bandantriebsvorrichtung nach Anspruch 3, bei der die Erfassungseinrichtung (16) für die Bandgeschwindigkeit in der Lage ist, einen Erfassungsvorgang unter Verwendung der Gesamtinformation aus der Frequenzinformation fs proportional zu der Rotation der Abspulrolle (1) und aus der Frequenzinformation ft proportional zu der Drehung der Aufspulrolle (1) zu bewirken.

## Revendications

**1.** Appareil d'entraînement de bande d'un appareil de reproduction d'enregistrements effectués sur un support du type bande afin de commander le couple d'un moteur (11) de bobine débitrice en fonction d'une information de couple Qs, une information de couple de compensation d'accélération CMPT et une information de couple en retour $Q_B$ y étant ajoutées, comprenant :

un moyen (8) de détection de diamètre de bobine débitrice, servant à détecter une information de rayon Rs de la bobine débitrice,

un moyen (12) de détection de diamètre de bobine réceptrice, servant à détecter une information de rayon $R_T$ de la bobine réceptrice,

un moyen (13) de traitement de l'inertie de la bobine débitrice, servant à calculer une information Js correspondant à l'inertie de la bobine débitrice (1) en fonction de l'information de rayon Rs de la bobine débitrice (1),

un moyen (14) de traitement de l'inertie de la bobine réceptrice, servant à calculer une information $J_T$ correspondant à l'inertie de la bobine réceptrice (2) en fonction de l'information de rayon $R_T$ de la bobine réceptrice (2),

caractérisé en ce que l'appareil d'entraînement de bande comprend en outre :

un moyen (15, 27) de détection de couple d'accélération, décélération de la bobine réceptrice, servant à détecter une information ACCT proportionnelle à l'amplitude du couple intervenant dans l'accélération, décélération de la bobine réceptrice (2),

un moyen (17) de calcul de couple de compensation d'accélération de la bobine réceptrice, servant à calculer l'information de couple de compensation d'accélération CMPT correspondant à l'accélération, décélération de la bobine réceptrice (2) à l'aide des informations de rayon Rs, $R_T$ des deux bobines (1, 2), des informations d'inertie Js, $J_T$ des deux bobines (1, 2), et de l'information de couple d'accélération, décélération ACCT de la bobine réceptrice,

un moyen (9) de calcul de couple en retour, servant à calculer l'information de couple en retour $Q_B$ proportionnelle à l'information de rayon Rs de la bobine débitrice (1), et

un moyen d'addition (18) servant à ajouter l'information de couple en retour $Q_B$ à l'information de couple de compensation d'accélération CMPT.

**2.** Appareil d'entraînement de bande d'un appareil de reproduction d'enregistrements effectués sur un support du type bande selon la revendication 1, où le moyen (15) de détection de couple d'accélération, décélération de la bobine réceptrice est composé d'un premier et d'un deuxième compteur du type compteur-décompteur (21, 22) qui est conçu pour augmenter, diminuer sa valeur en fonction de l'information de vitesse de bande considérée comme cible et de la différence avec la vitesse de bande à détecter en réalité, et la valeur échantillonnée de la valeur de comptage-décomptage est, pour chaque période de temps constante, délivrée au titre de l'information de couple d'accélération, décélération de la bobine réceptrice, de sorte que la valeur du compteur-décompteur est destinée à être initialisée après l'opération de sortie.

**3.** Appareil d'entraînement de bande d'un appareil de reproduction d'enregistrements éffectués sur un support du type bande selon les revendications 1 et/ou 2, comprenant :

des premier, deuxième compteurs-décompteurs (21, 22) destinés à augmenter, diminuer leurs valeurs en fonction de l'information de vitesse de bande considérée comme but et de la différence avec la vitesse de bande à détecter en réalité,

un moyen d'addition (23) servant à ajouter l'information de sortie $Q_{T1}$ du premier compteur-décompteur (21) et l'information de sortie $Q_{T2}$ du deuxième compteur-décompteur (22),

où le deuxième compteur-décompteur (22) échantillonne la valeur de comptage pour chaque temps constant, l'information de comptage est délivrée au moyen d'addition (23), la valeur de comptage est traitée de façon à être initialisée après l'opération de sortie, et le couple (7) du moteur de la bobine côté réception est destiné à être commandé en fonction de l'information de sortie du moyen d'addition (23), comprenant en outre :

un générateur (19) d'impulsions de référence de vitesse de bande, servant à produire des impulsions dont la fréquence est proportionnelle à la vitesse de bande considérée comme but, et
un détecteur (16) de vitesse de bande servant à détecter la vitesse de bande réelle.

4. Appareil d'entraînement de bande d'un appareil de reproduction d'enregistrements effectués sur un support du type bande selon la revendication 3, où le détecteur (16) de vitesse de bande est destiné à effectuer une opération de détection en utilisant l'information totale de l'information de fréquence fs proportionnelle à la rotation de la bobine débitrice (1) et de l'information de fréquence ft proportionnelle à la rotation de la bobine réceptrice (2).

Fig. 1

Fig. 2

S reel inertia $J_S$

$Js \approx (Jfix + Jvar)$

$Jvar \approx K1 (R_1^4 - Rh^4)$

$Jfix$

hub radius
$Rh$

$R_1$

maximum
radius

S reel radius
information $Rs$

Fig. 3

T reel inertia $J_T$

$Jfix$

maximum
radius

hub radius
$Rh$

T reel radius
information $R_T$

Fig. 4

acceleration
compensating
coefficient $\dfrac{R_T \cdot Js}{Rs \cdot J_T}$

hub radius
$Rh$

maximum
radius

S reel radius
information $Rs$

14

# Fig. 5

total information of both reel rotation frequencies ( fs + ft )

tape speed V₂

tape speed V₁

winding start

intermediate tape winding

winding end

# Fig. 6

large torque in delivery direction

large

QT : T reel driving information

center — generated torque O

small — large torque in tightening up direction in winding

# Fig. 7

(a)

acceleration

tape speed instructions

deceleration

elapsed time

$t_0$    $t_1$    $t_2$    $t_3$    t

(b)

$Q_{T1}$

$t_0$    $t_1$    $t_2$    $t_3$    t

(c)

$Q_{T2}$

$t_0$    $t_1$    $t_2$    $t_3$    t

(d)

$Q_T$

$t_0$    $t_1$    $t_2$    $t_3$    t

Fig. 8

*Fig. 9(a)*

```
        ┌─────────────────────┐
        │   main processing   │
        │    shuttle mode     │
        └─────────────────────┘
                  │
                  ▼
    ┌───────────────────────────────────┐ ── 901
    │ external interruption O : IRQ O   │
    │ external interruption 1 : IRQ 1   │
    │ permit                            │
    └───────────────────────────────────┘
                  │
                  ▼
    ┌───────────────────────────────────┐ ── 902
    │        timer O, 1 start           │
    └───────────────────────────────────┘
                  │
                  ▼
    ┌───────────────────────────────────┐ ── 903
    │        computation  of            │
    │      S reel deameter : Rs         │
    │      T reel deameter : RT         │
    └───────────────────────────────────┘
                  │
                  ▼
    ┌───────────────────────────────────┐ ── 904
    │        computation  of            │
    │      S reel  inertia : Js         │
    │      T reel  inertia : JT         │
    └───────────────────────────────────┘
                  │
                  ▼
    ┌───────────────────────────────────┐ ── 905
    │        computation of             │
    │       back torque : QB            │
    └───────────────────────────────────┘
                  │
                  ▼
    ┌───────────────────────────────────┐ ── 906
    │        computation  of            │
    │   acceleration  compensating      │
    │   coefficient                     │
    │          RT · Js                  │
    │          ───────                  │
    │          Rs · JT                  │
    └───────────────────────────────────┘
                  │
                  ▼
    ┌───────────────────────────────────┐ ── 907
    │ computatuin of T reel acceleration│
    │ compensating  torque : CMPT       │
    │                                   │
    │       RT · Js                     │
    │ CMPT =─────── x ACCT x K          │
    │       Rs · JT                     │
    └───────────────────────────────────┘
                  │
                  ▼
    ┌───────────────────────────────────┐ ── 908
    │ computation pf S reel torque : Qs │
    │       Qs = QB + CMPT              │
    └───────────────────────────────────┘
                  │
                  ▼
    ┌───────────────────────────────────┐ ── 909
    │ computation of interruption       │
    │ period of timer corresponding to  │
    │ control  target tape speed :      │
    │ timer O control  counter          │
    └───────────────────────────────────┘
```

Step 906:

$$\frac{R_T \cdot J_S}{R_S \cdot J_T}$$

Step 907:

$$CMPT = \frac{R_T \cdot J_S}{R_S \cdot J_T} \times ACCT \times K$$

Step 908:

$$Q_S = Q_B + CMPT$$

## Fig. 9(b)

```
        ( timer O )
             │
             ▼
  ┌──────────────────────┐ ╱ 910
  │ first, second U/D    │
  │ counter  down :      │
  │   QT1 ◄──── QT1 - 1   │
  │   QT2 ◄──── QT2 - 1   │
  └──────────────────────┘
             │
             ▼
  ┌──────────────────────┐ ╱ 911
  │ timer O control      │
  │ counter is set       │
  └──────────────────────┘
             │
             ▼
  ┌──────────────────────┐ ╱ 912
  │                      │
  │   timer O start      │
  │                      │
  └──────────────────────┘
             │
             ▼
        ( R E T I )
```

## Fig. 9(e)

```
        ( timer 1 )
             │
             ▼
  ┌──────────────────────┐ ╱ 917
  │ T reel acceleration  │
  │ torque  detection    │
  │ ACCT ◄──── second    │
  │  U/D  counter        │
  └──────────────────────┘
             │
             ▼
  ┌──────────────────────┐ ╱ 918
  │ second U/D counter   │
  │ is  initialized      │
  └──────────────────────┘
             │
             ▼
  ┌──────────────────────┐ ╱ 919
  │ computation of       │
  │ T reel torque : QT   │
  │   QT = QT1 + QT2     │
  └──────────────────────┘
             │
             ▼
  ┌──────────────────────┐ ╱ 920
  │   timer 1 start      │
  └──────────────────────┘
             │
             ▼
        ( R E T I )
```

## Fig. 9(c)

```
  ┌────────────────────────────┐
  │ IRQ  O                     │
  │ (S reel FG interruption)   │
  └────────────────────────────┘
             │
             ▼
  ┌──────────────────────┐ ╱ 913
  │ first, second U/D    │
  │ counter  up          │
  │   QT1 ◄──── QT1 + 1   │
  │   QT2 ◄──── QT2 + 1   │
  └──────────────────────┘
             │
             ▼
  ┌──────────────────────┐ ╱ 914
  │ IRQ  O  permitted    │
  └──────────────────────┘
             │
             ▼
        ( R E T I )
```

## Fig. 9(d)

```
  ┌────────────────────────────┐
  │ IRQ  1                     │
  │ (T reel FG interruption)   │
  └────────────────────────────┘
             │
             ▼
  ┌──────────────────────┐ ╱ 915
  │ first, second U/D    │
  │ counter  up          │
  │   QT1 ◄──── QT1 + 1   │
  │   QT2 ◄──── QT2 + 1   │
  └──────────────────────┘
             │
             ▼
  ┌──────────────────────┐ ╱ 916
  │ IRQ  1  permitted    │
  └──────────────────────┘
             │
             ▼
        ( R E T I )
```

Fig. 10

## Fig. 11

( main shuttle mode )

↓

**1101**

| timer 1 starts |

↓

**903**

| computatuin of<br>S reel diameter : $R_S$<br>T reel diameter : $R_T$ |

↓

**904**

| computatuin of<br>S reel inertia : $J_S$<br>T reel inertia : $J_T$ |

↓

**905**

| computatuin of<br>back torque : $Q_B$ |

↓

**906**

| computatuin of acceleration<br>compensating efficient<br>$$\dfrac{R_T \cdot J_S}{R_S \cdot J_T}$$ |

↓

**907**

| computation of<br>T reel acceleration<br>compensating torque<br>$$CMPT = \dfrac{P_T \cdot J_S}{R_S \cdot J_T} \times ACCT \times K$$ |

↓

**908**

| computatuin of<br>S reel torque : $Q_S$<br>$Q_S = Q_B + CMPT$ |

( timer 1 )

↓

**1102**

| T reel motor torque<br>information : $Q_T$<br>$Q_T$ is read<br>$Q_{T(NEW)} \leftarrow Q_T$ |

↓

**1103**

| difference computation<br>with respect to previous<br>input torque information<br>$ACCT = Q_{T(NEW)} - Q_{T(OLD)}$ |

↓

**1104**

| data is renewed in<br>preparation for the next<br>computation<br>$Q_{T(OLD)} \leftarrow Q_{T(NEW)}$ |

↓

**920**

| timer 1 starts |

↓

( R E T I )